Europäisches Patentamt

(19) European Patent Office

Office européen des brevets

(11) Veröffentlichungsnummer: **0 021 455**

**A1**

(12) **EUROPÄISCHE PATENTANMELDUNG**

(21) Anmeldenummer: 80200155.2

(22) Anmeldetag: 25.02.80

(51) Int. Cl.³: **H 04 R 1/02**
**F 16 B 12/04**

(30) Priorität: 07.06.79 DE 2922998

(43) Veröffentlichungstag der Anmeldung:
07.01.81 Patentblatt 81/1

(84) Benannte Vertragsstaaten:
AT CH FR GB IT NL SE

(71) Anmelder: Braun Aktiengesellschaft
Rüsselsheimer Strasse 22
D-6000 Frankfurt/Main(DE)

(72) Erfinder: Hartwein, Peter
Frankfurter Strasse 14
D-6240 Königstein(DE)

(72) Erfinder: Kadner, Waldemar
Wiesenweg 35
D-6056 Heusenstann(DE)

(72) Erfinder: Rams, Dieter
Am Forsthaus 4
D-6242 Kronberg(DE)

(72) Erfinder: Schinke, Horst
Dachbergstrasse 15
D-6232 Bad Soden(DE)

(74) Vertreter: Einsele, Rolf
Braun Aktiengesellschaft Postfach 1120
D-6242 Kronberg/Taunus(DE)

(54) Lautsprechergehäuse.

(57) Es wird ein Lautsprechergehäuse vorgeschlagen, welches ebene und voneinander getrennte Gehäusewände aufweist, die über Verbindungsteile miteinander verbindbar sind.

EP 0 021 455 A1

FIG.1

Lautsprechergehäuse

Die Erfindung betrifft ein Lautsprechergehäuse nach dem Oberbegriff des Patentanspruchs 1.

Es ist bereits ein Lautsprechergehäuse vorgeschlagen worden, das eine Front- und eine Rückwand aufweist, wobei die Front- oder Schallwand beispielsweise aus Schaumspritzgruß besteht und über einen Dichtungsring in einem Zargenteil eingedrückt ist (DE-AS 27 38 295). Die Wände des Lautsprechers sind hierbei jedoch entweder zusammenhängend oder durch aufwendige Verbindungsmittel miteinander verbunden.

Ferner ist eine Lautsprecherbox aus Glas bekannt, die sechs ebene Wände aufweist, welche einen Würfel bilden (DE-OS 22 60 983). Die Wände dieser Lautsprecherbox sind jedoch miteinander verklebt oder verkittet, so daß sie nur auf umständliche Weise zusammengefügt werden können.

Weiterhin ist bereits eine Kiste vorgeschlagen worden, die ebene und voneinander getrennte Gehäusewände aufweist, wobei Verbindungsteile vorgesehen sind, mit denen die getrennten Gehäusewände miteinander verbindbar sind (DE-OS 27 22 343). Diese Kiste weist jedoch an den Verbindungskanten jeweils zwei spitze Ecken auf, an denen man sich verletzen kann.

Der Erfindung liegt deshalb die Aufgabe zugrunde, Lautsprechergehäuse zu schaffen, die auf einfache Weise zusammengefügt werden können und die keine Nischen an ihren äußeren Verbindungskanten aufweisen.

Diese Aufgabe wird gemäß dem kennzeichnenden Teil des Patentanspruchs 1 gelöst.

Ein Ausführungsbeispiel der Erfindung ist in der Zeichnung dargestellt und im folgenden näher beschrieben.

Es zeigen:

Fig. 1 eine perspektivische Ansicht einer Lautsprecherbox mit drei Frontlautsprechern;

Fig. 2 eine Verbindung zwischen dem Ober- oder Unterteil des Lautsprechers mit dem übrigen Lautsprechergehäuse;

Fig. 3 ein Verbindungsteil mit zwei angrenzenden Lautsprecherwänden;

Fig. 4 eine perspektivische Ansicht eines weiteren Lautsprechergehäuses;

Fig. 5 eine Verbindung zwischen dem Oberteil und einer Seitenwand des Lautsprechergehäuses;

Fig. 6 eine Draufsicht auf die Verbindung zwischen Schallwand und Seitenwand;

Fig. 7 ein Verbindungsteil zwischen Schallwand und Seitenwand;

Fig. 8 ein weiteres Verbindungsteil für die Verbindung von Lautsprecher-Gehäusewänden;

Fig. 9 ein weiteres Verbindungsteil für die Verbindung von Lautsprecher-Gehäusewänden;

Fig.10 ein weiteres Verbindungsteil für zwei Lautsprecher-Gehäusewände;

Fig.11 ein weiteres Verbindungsteil für zwei Lautsprecher-Gehäusewände;

Fig.12 ein weiteres Verbindungsteil für zwei Lautsprecher-Gehäusewände;

Fig.13 ein weiteres Verbindungsteil für zwei Lautsprecher-Gehäusewände;

Fig.14 ein weiteres Verbindungsteil für zwei Lautsprecher-Gehäusewände;

Fig.15 ein weiteres Verbindungsteil für zwei Lautsprecher-Gehäusewände;

Fig.16 ein weiteres Verbindungsteil für zwei Lautsprecher-Gehäusewände.

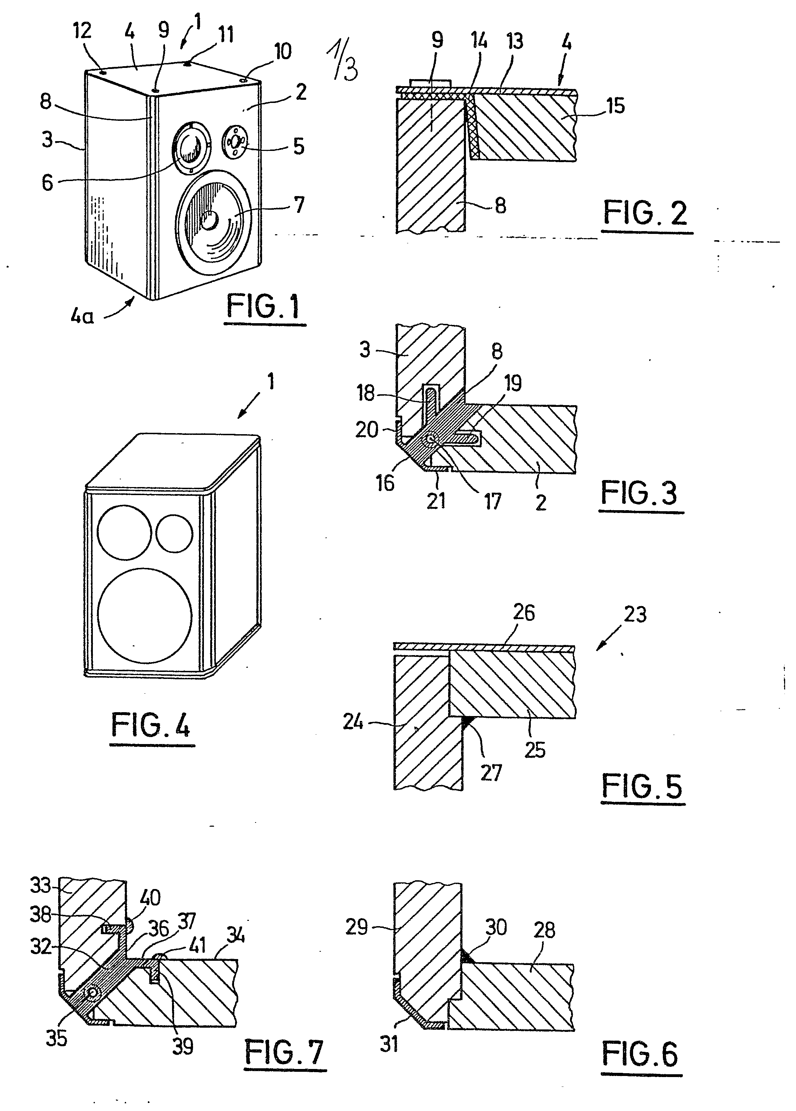

In der Fig.1 ist ein Lautsprecher 1 perspektivisch dargestellt, von dem eine Frontwand oder Schallwand 2, eine Seitenwand 3 und ein Deckel 4 zu erkennen sind. Auf der Frontwand 2 sind drei Lautsprecher angeordnet, nämlich ein Hochtonlautsprecher 5, ein Mitteltonlautsprecher 6 und ein Tieftonlautsprecher 7. Alle Lautsprecher 5 bis 7 sind mit kalottenförmigen Abdeckungen überspannt. Wesentlich für die Erfindung ist nun, daß die Frontwand 2 mit der Seitenwand 3 über ein Verbindungsteil 8 verbunden und der Deckel 4 auf alle Seitenwände 2, 3 aufgesetzt ist. Die Verbindung des Deckels 4 mit dem übrigen Lautsprechergehäuse erfolgt derart, daß Schrauben 9, 10, 11, 12 durch den Deckel 4 in die Verbindungsteile 8 eingelassen sind. Auf entsprechende Weise wird der Boden 4a mit dem Lautsprechergehäuse verbunden.

In der Fig.2 ist näher dargestellt, wie die Verbindung des Deckels 4 mit dem Lautsprechergehäuse 1 erfolgt. Man erkennt hierbei einen Boden- oder Deckelabschluß 13, der z. B. aus Aluminium besteht und auf einer Spanplatte 15 verleimt ist. Mit Hilfe der Schraube 9 und einer Dichtung 14 ist der Boden- oder Deckelabschluß 4 mit dem Verbindungsteil 8 verbunden.

In der Fig.3 ist ein Verbindungsteil 8 in der Draufsicht gezeigt, das im wesentlichen aus einem Aluminiumprofil besteht, welches eine Stirnwand 16 aufweist, die zu der Schallwand 2 und der Seitenwand 3 einen Winkel von $45^o$ einschließt. Das Verbindungsteil 8 weist außerdem eine Bohrung 17 für die Aufnahme der Schraube 9 sowie zwei senkrecht aufeinander stehende Stege 18, 19 auf, welche in entsprechende Aussparungen der Schall- und Seitenwand 2, 3 eingreifen. In diesen Aussparungen wird vor der Verbindung zwischen Verbindungsteil 8 und Gehäusewänden ein Leim oder sonstiger Klebstoff eingebracht. Für kurze Abbindzeiten kann eine Ultraschallverleimung vorgenommen werden.

Damit an den Ecken des Lautsprechergehäuses 1 keine Kanten entstehen, sind im Anschluß an die Stirnwand 16 zwei um $45^o$ abgewinkelte Laschen 20, 21 vorgesehen, die auf entsprechende Ausfräsungen der Lautsprecherwände 2, 3 aufliegen.

In der Fig.4 ist ein weiteres Lautsprechergehäuse dargestellt, das keine Deckelschrauben aufweist und ohne spezielles Verbindungsprofil auskommt.

Die Befestigung des Deckel- oder Bodenteils 23 an dem Gehäuse 1 ist in der Fig.5 näher dargestellt. Die Gehäusewände 24 des Lautsprechergehäuses 1 sind dabei auf der Innenseite derart ausgefräst, daß die Spanplatte 25 des Deckelteils 23 in diese Ausfräsung eingreift.

der metallische Abschluß 26 überdeckt hierbei die Gehäusewände 24. Zwischen Gehäusewand 24 und Spanplatte 25 kann eine Leimkante 27 vorgesehen sein.

In der Fig.6 ist gezeigt, wie die Kanten der Schallwand 28 und der Seitenwand 29 auseinander stoßen. Auf die Kante der Seitenwand 29 ist hierbei ein Stranggußprofil 31 aufgeleimt. Mit 30 ist eine Leimkante zwischen Schallwand 28 und Seitenwand 29 bezeichnet.

Die Fig.7 stellt ein weiteres Verbindungsteil 32 dar, das bei einem Lautsprechergehäuse vorgesehen ist, das dem in den Figuren 1 und 2 dargestellten Gehäuse entspricht. Dieses Verbindungsteil 32 ist ein Aluminiumprofil, das zwei Spanplatten 33, 34 miteinander verbindet und eine Bohrung 35 für die Aufnahme einer Schraube aufweist. Der Boden- und Deckelabschluß des entsprechenden Lautsprechergehäuses ist dasselbe wie beim Lautsprechergehäuse der Figuren 1 und 2.

Im Gegensatz zu dem in der Fig.3 dargestellten Verbindungsteil 8 weist das Verbindungsteil 32 an seinem auf das Innere des Lautsprechergehäuses gerichtete Ende zwei senkrecht aufeinander stehende Teile 36, 37 auf, auf denen wiederum jeweils ein weiteres Teil 38, 39 senkrecht steht, so daß dieses Teil 38, 39 in die Spanplatten 33, 34 eingreift. Mit 40, 41 sind zwei Leimkanten bezeichnet, welche die Teile 36, 37 mit den Spanplatten 33, 34 verbinden. Die Verleimung erfolgt erst nach dem Zusammenstecken, wobei ein elastischer Kleber für die Schallabdichtung genommen wird.

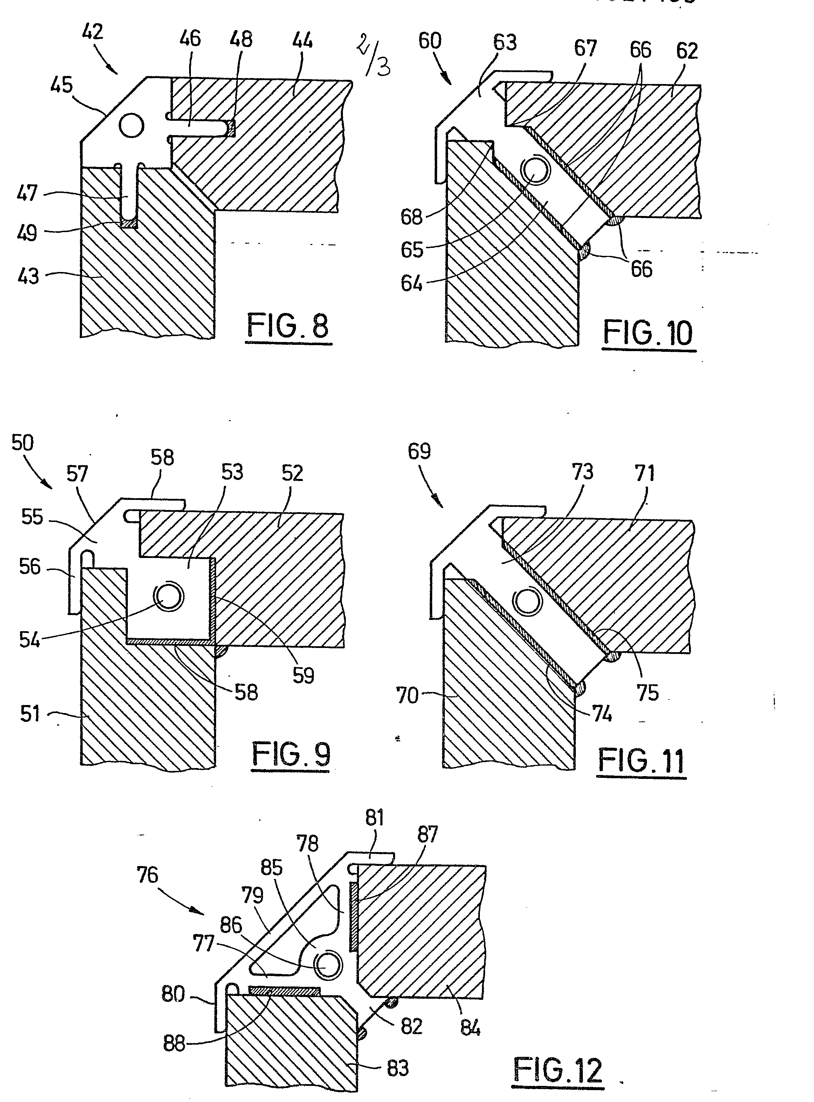

In der Fig.8 ist eine weitere Variante eines Verbindungsteils 42 für die Verbindung von Wänden 43, 44 eines Lautsprechergehäuses gezeigt. Dieses Verbindungsteil 42 besteht aus einem nahezu quadratischen Grundteil, bei dem ein Dreieck abgeschnitten ist. Hierdurch entsteht eine stumpfe Außenkante 45 an der Verbindungsstelle zweier Wände. Senkrecht auf dem quadratischen Grundteil 42 sind zwei Nasen 46, 47 angeordnet, die in Ausspannungen 48, 49 der Wände 43, 44 eingreifen und mit diesen verleimt sind.

In der Fig.9 ist ein Verbindungsteil 50 für zwei Lautsprecher-Gehäusewände 51, 52 gezeigt, das einen nahezu quadratischen Mittelteil 53 mit einer Bohrung 54 und mit einem Fortsatz 55 aufweist, wobei dieser Fortsatz im wesentlichen drei Flächen 56, 57, 58 enthält, die den Flächen 21, 16, 20 der Fig.3 entsprechen. Die Wände 51, 52 weisen entsprechende Aussparungen 58, 59 auf, in welche der Mittelteil 53 und der Fortsatz 55 eingreifen können. Die Verbindung zwischen den Wänden 51, 53 und dem Verbindungsteil 50 kann wieder mittels eines Klebers hergestellt werden.

Die Fig.10 zeigt ein Verbindungsteil 60 für zwei Wände 61, 62, das einen Fortsatz 63 enthält, der weitgehend dem Fortsatz 55 der Fig.9 entspricht. Dieser Fortsatz 63 befindet sich an einem langgestreckten Körper 64, der eine Bohrung 65 aufweist und der mittels Leim 66 mit den Wänden 61, 62 verbunden ist. Zwischen dem langgestreckten Körper 64 und dem Fortsatz 63 sind zwei Einkerbungen 67, 68 vorgesehen, in welche Nasen der Wände 61, 62 eingreifen.

Die Fig.11 zeigt ein Verbindungsteil 69, das im wesentlichen dem Verbindungsteil 60 der Fig.10 entspricht und eine Bohrung 72 enthält. Es sind jedoch keine Einkerbungen vorgesehen, so daß die Seiten des langgestreckten Körpers 73 glatt auf den Wänden 70, 71 aufliegen und mit diesen mittels Leim 74, 75 verbunden sind.

In der Fig.12 ist ein Verbindungsteil 76 dargestellt, das eine Grundform ähnlich einem gleichseitigen Dreieck hat, wobei die Seiten 77, 78, 79 dieses Dreiecks an ihren Verbindungsstellen Laschen 80, 81, 82 aufweisen, welche die Wände 83, 84 entweder an der Außenseite übergreifen oder aber auf der Innenseite verbinden. An der Verbindungsstelle der Seiten 77 und 78 ist eine kreisrunde Verdichtung mit einer Bohrung 86 zur Aufnahme einer Schraube vorgesehen. Außerdem befinden sich zwischen den Seiten 77 und 78 und den zugeordneten Stoßstellen der Wände 83, 84 Nischen 87, 88 für die Aufnahme von Leim.

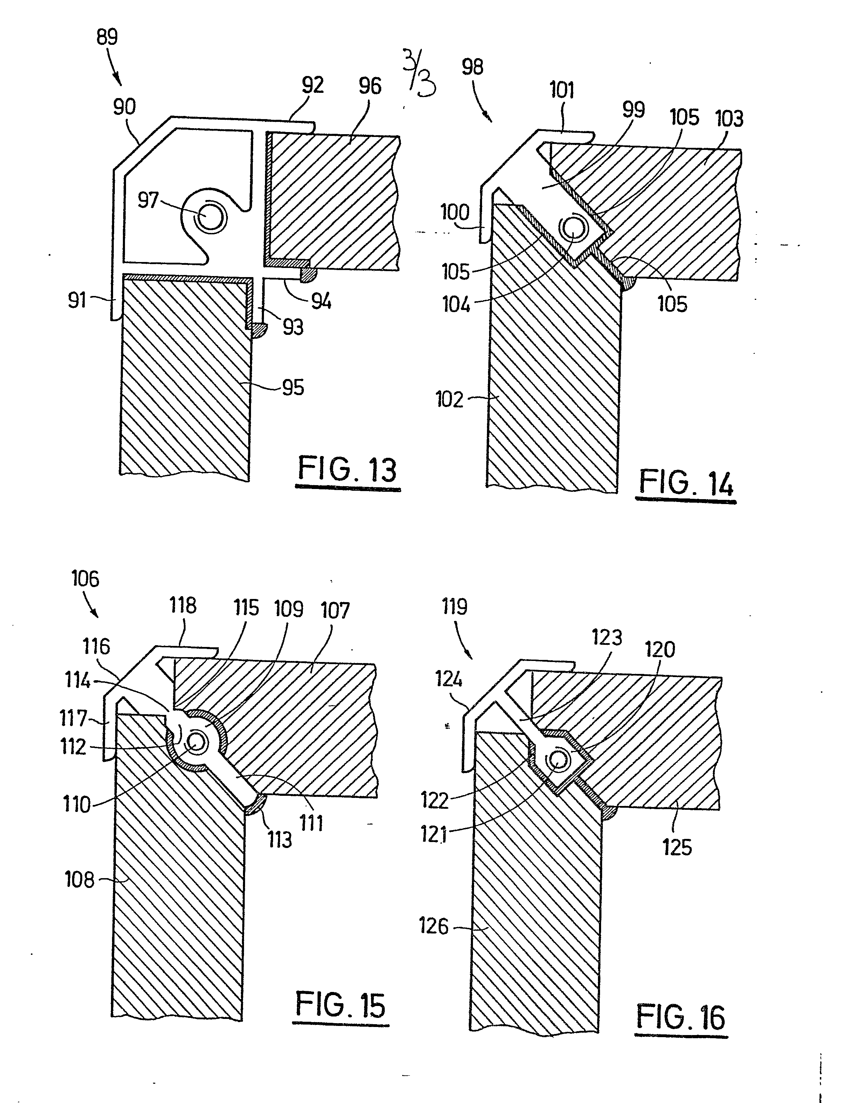

Die Fig.13 zeigt ein Verbindungsteil 89, das im wesentlichen als quadratischer Hohlkörper ausgebildet ist, der an seiner einen Ecke eine $45^\circ$ Abflachung 90 und an seinen anderen Ecken eine Lasche 91, 92 oder zwei aufeinander senkrecht stehende Laschen 93, 94 aufweist. Dabei bilden die Laschen 92, 94 bzw. 91, 93 Aufnehmer für die Aufnahme von Wänden 95, 96. Von der Stoßstelle der Laschen 93, 94 ragt ein Vorsprung in das Innere des Verbindungsteils 89, der eine Bohrung 97 enthält.

In der Fig.14 ist ein Verbindungsteil 98 gezeigt, das aus einem Körper 99 mit rechteckförmigen Grundprofil besteht, der an seinem einen Ende mit zwei Laschen 100, 101 versehen ist, die in einem Winkel von $45^\circ$ zur Achse des Körpers 99 verlaufen. Der Körper 99 ragt in eine Ausspannung zwischen zwei Wänden 102, 103 hinein, wobei diese Wände 102, 103 unterhalb des mit einer Bohrung 104 versehenen Körpers 99 direkt aneinander stoßen. Der Körper 99 ist mit den Wänden 102, 103 ebenso über Leimfugen 105 verbunden wie die Wände 102, 103 untereinander.

Die Fig.15 stellt ein weiteres Verbindungsteil 106 dar, das zwei Wände 107, 108 untereinander verbindet. Dieses Verbindungsteil 106 enthält einen kreisförmigen Kernteil 109 mit einer Bohrung 110, von dem zwei Stege 111, 112 wegführen. Der Steg 111 ist auf das Innere des Lautsprechergehäuses gerichtet und mit diesem mittels einer Leimkante 113 verleimt. Dagegen führt der Steg 112 nach außen, weist zwei Einkerbungen 114, 115 auf und verdickt sich dann wieder, wobei er an seinem verdickten Teil 116 zwei Laschen 117, 118 aufweist, deren geometrische Verlängerungen senkrecht aufeinander stehen. Die Außenwand des Kernteils 109 ist mit den Wänden 107, 108 ebenfalls verklebt.

In der Fig.16 ist ein Verbindungsteil 119 dargestellt, das einen Körper 120 mit rechteckigem Grundriß und einer Bohrung 121 aufweist, wobei auf diesem Körper 120 ein Körper 122 mit dreieckigem Grundriß aufgesetzt ist und beide Körper 120, 122 eine Einheit bilden. Von der Spitze des dreieckigen Körpers 122 führt ein Steg 123 zu einer Verblendung 124, welche dieselben äußeren Konturen hat wie die in der Figuren 11, 14, 15 gezeigten Verblendungen. Die Wände 125, 126 stoßen unterhalb des Körpers 120 aneinander und sind mittels Leimfugen untereinander verbunden.

Patentansprüche

1. Lautsprechergehäuse mit zwei ebenen Seitenwänden, einer ebenen Rückwand und einer mit Lautsprechern versehenen ebenen Frontwand, dadurch gekennzeichnet, daß alle vier Gehäusewände mittels eines Bodens (4a) und eines Deckels (4) abgeschlossen sind, und daß Verbindungsteile (8) vorgesehen sind, mit denen die vier Gehäusewände derart untereinander verbindbar sind, daß die durch zwei aneinanderstoßenden Gehäusewände gebildeten Eckstöße eine Dicke haben, die mindestens der Dicke der Gehäusewände entspricht.

2. Lautsprechergehäuse nach Anspruch 1, dadurch gekennzeichnet, daß der Boden (4a) und der Deckel (4) mittels Schrauben, Nieten (9, 10, 11, 12) oder dergleichen befestigt sind, die in die Verbindungsteile (8) eingreifen.

3. Lautsprechergehäuse nach Anspruch 1, dadurch gekennzeichnet, daß die Frontwand einen Hochtöner (5), einen Mitteltöner (6) und einen Tieftöner (7) enthält.

4. Lautsprechergehäuse nach Anspruch 2, dadurch gekennzeichnet, daß die Lautsprecher (5, 6, 7) mit kalottenförmigen Abdeckungen überspannt sind.

5. Lautsprechergehäuse nach Anspruch 1, dadurch gekennzeichnet, daß die Verbindungsteile jeweils eine Fläche (16, 31, 45, 57, 90) aufweisen, die zu den Flächen der Seiten-, Front- und Rückwände jeweils einen Winkel von 45$^o$ einschließt.

6. Lautsprechergehäuse nach Anspruch 1, dadurch gekennzeichnet, daß die Verbindungsteile (8) Stege (18, 19) aufweisen, die in entsprechende Ausspannungen der Lautsprecherwände (2, 3) eingreifen.

7. Lautsprechergehäuse nach Anspruch 6, dadurch gekennzeichnet, daß die Verbindungsteile (8) mit Bohrungen (17) für die Aufnahme von Schrauben (9) oder dergleichen versehen wird.

0021455

8. Lautsprechergehäuse nach Anspruch 1, dadurch gekennzeichnet, daß als Verbindungsteile die Profile der Kanten der Lautsprecherwände (28, 29) dienen und diese Profile verleimt sind.

9. Lautsprechergehäuse nach Anspruch 8, dadurch gekennzeichnet, wenigstens eine Kante einer Lautsprecherwand (29) mit einem Metallteil (31) verblendet ist.

10. Lautsprechergehäuse nach Anspruch 1, dadurch gekennzeichnet, daß das Verbindungsteil (32) einen Körper mit rechteckigem Querschnitt aufweist, wobei dieser Körper an seinem einen Ende ein Verblendungsteil und an seinem anderen Ende zwei Haken aufweist, die aus jeweils zwei senkrecht aufeinander stehenden Teilen (36, 37, 38, 39) bestehen.

11. Lautsprechergehäuse nach Anspruch 1, dadurch gekennzeichnet, daß das Verbindungsteil (42) einen nahezu dreieckförmigen Grundkörper mit zwei Nasen (46, 47) aufweist.

12. Lautsprechergehäuse nach Anspruch 1, dadurch gekennzeichnet, daß das Verbindungsteil (50) einen Grundkörper (53) von nahezu quadratischer Form aufweist, der einen Fortsatz (55) mit einer Verblendung (56, 57, 58) enthält.

13. Lautsprechergehäuse nach Anspruch 1, dadurch gekennzeichnet, daß das Verbindungsteil (60) einen langgestreckten Körper (64) enthält, der mit einem eine Verblendung aufweisenden Fortsatz (63) versehen ist, wobei zwischen dem Körper (64) und dem Fortsatz (63) Einkerbungen (65, 67) vorgesehen sind.

14. Lautsprechergehäuse nach Anspruch 13, dadurch gekennzeichnet, daß das Verbindungsteil (69) keine Einkerbungen (65, 67) aufweist.

15. Lautsprechergehäuse nach Anspruch 1, dadurch gekennzeichnet, daß das Verbindungsteil (76) die Form eines gleichseitigen hohlen Dreiecks hat, wobei die Seiten dieses Dreiecks durch Stege (77, 78, 79) gebildet werden, die an ihren Verbindungsstellen Fortsätze (80, 81, 82) aufweisen.

16. Lautsprechergehäuse nach Anspruch 1, <u>dadurch gekennzeichnet</u>, daß das Verbindungsteil (89) im wesentlichen die Form eines hohlen Quadrats hat, wobei eine Kante (90) des Quadrates abgeflacht ist und an den anderen Kanten Flansche (91, 92, 93, 94) vorgesehen sind.

17. Lautsprechergehäuse nach Anspruch 1, <u>dadurch gekennzeichnet</u>, daß das Verbindungsteil (98) einen Körper (99) mit im wesentlichen rechteckigen Querschnitt enthält, der mit einer Verblendung versehen ist und der nicht über die gesamten Stoßstellen der Lautsprecherwände (102, 103) reicht.

18. Lautsprechergehäuse nach Anspruch 1, <u>dadurch gekennzeichnet</u>, daß das Verbindungsteil (106) einen zylindrischen Körper (109) mit einer Bohrung (110) aufweist, der mit einem ersten Steg (111) versehen ist, darin das Innere des Lautsprechergehäuses führt und der mit einem zweiten Steg (116) versehen ist, der nach außen führt und eine Verblendung (117, 118) enthält.

19. Lautsprechergehäuse nach Anspruch 1, <u>dadurch gekennzeichnet</u>, daß das Verbindungsteil (119) eine Verblendung (124) aufweist, die über einen Steg (123) mit einem quasi-quadratischen Körper (120) verbunden ist, der in Ausspannungen der Wände (125, 126) eingreift.

Patentansprüche

1. Lautsprechergehäuse mit zwei ebenen Seitenwänden, einer ebenen Rückwand, einer mit Lautsprechern versehenen ebenen Frontwand sowie mit einem Boden und einem Deckel, dadurch gekennzeichnet, daß Verbindungsteile (8) vorgesehen sind, mit denen die vier Gehäusewände derart untereinander verbindbar sind, daß die durch zwei aneinanderstoßende Gehäusewände gebildeten Eckstöße eine Dicke haben, die mindestens der Dicke der Gehäusewände entsprechen und daß die Verbindungsteile (8) Einrichtungen zur Befestigung von Boden (4a) und Deckel (4) aufweisen.

2. Lautsprechergehäuse nach Anspruch 1, dadurch gekennzeichnet, daß der Boden (4a) und der Deckel (4) mittels Schrauben, Nieten (9, 10, 11, 12) oder dergleichen befestigt sind, die in die Verbindungsteile (8) eingreifen.

3. Lautsprechergehäuse nach Anspruch 1, dadurch gekennzeichnet, daß die Frontwand einen Hochtöner (5), einen Mitteltöner (6) und einen Tieftöner (7) enthält.

4. Lautsprechergehäuse nach Anspruch 2, dadurch gekennzeichnet, daß die Lautsprecher (5, 6, 7) mit kalottenförmigen Abdeckungen überspannt sind.

5. Lautsprechergehäuse nach Anspruch 1, dadurch gekennzeichnet, daß die Verbindungsteile jeweils eine Fläche (16, 31, 45, 57, 90) aufweisen, die zu den Flächen der Seiten-, Front- und Rückwände jeweils einen Winkel von 45° einschließt.

6. Lautsprechergehäuse nach Anspruch 1, dadurch gekennzeichnet, daß die Verbindungsteile (8) Stege (18, 19) aufweisen, die in entsprechende Ausspannungen der Lautsprecherwände (2, 3) eingreifen.

7. Lautsprechergehäuse nach Anspruch 6, dadurch gekennzeichnet, daß die Verbindungsteile (8) mit Bohrungen (17)
für die Aufnahme von Schrauben (9) oder dergleichen versehen wird.

8. Lautsprechergehäuse nach Anspruch 1, dadurch gekennzeichnet, daß als Verbindungsteile die Profile der Kanten
der Lautsprecherwände (18, 29) dienen und diese Profile
verleimt sind.

9. Lautsprechergehäuse nach Anspruch 8, dadurch gekennzeichnet, daß wenigstens eine Kante einer Lautsprecherwand
(29) mit einem Metallteil (31) verblendet ist.

10. Lautsprechergehäuse nach Anspruch 1, dadurch gekennzeichnet, daß das Verbindungsteil (32) einen Körper mit
rechteckigem Querschnitt aufweist, wobei dieser Körper
an seinem einen Ende ein Verblendungsteil und an seinem
anderen Ende zwei Haken aufweist, die aus jeweils zwei
senkrecht aufeinander stehenden Teilen (36, 37, 38, 39)
bestehen.

11. Lautsprechergehäuse nach Anspruch 1, dadurch gekennzeichnet, daß das Verbindungsteil (42) einen nahezu
dreieckförmigen Grundkörper mit zwei Nasen (46, 47 aufweist.

12. Lautsprechergehäuse nach Anspruch 1, dadurch gekennzeichnet, daß das Verbindungsteil (50) einen Grundkörper
(53) von nahezu quadratischer Form aufweist, der einen
Fortsatz (55) mit einer Verblendung (56, 57, 58) enthält.

13. Lautsprechergehäuse nach Anspruch 1, dadurch gekennzeichnet, daß das Verbindungsteil (60) einen langgestreckten Körper (64) enthält, der mit einem eine Verblendung aufweisenden Fortsatz (63) versehen ist, wobei zwischen dem Körper (64) und dem Fortsatz (63) Einkerbungen (65, 67) vorgesehen sind.

14. Lautsprechergehäuse nach Anspruch 13, dadurch gekennzeichnet, daß das Verbindungsteil (69) keine Einkerbungen (65, 67) aufweist.

15. Lautsprechergehäuse nach Anspruch 1, dadurch gekennzeichnet, daß das Verbindungsteil (76) die Form eines gleichseitigen hohlen Dreiecks hat, wobei die Seiten dieses Dreiecks durch Stege (77, 78, 79) gebildet werden, die an ihren Verbindungsstellen Fortsätze (80, 81, 82) aufweisen.

16. Lautsprechergehäuse nach Anspruch 1, dadurch gekennzeichnet, daß das Verbindungsteil (89) im wesentlichen die Form eines hohlen Quadrats hat, wobei eine Kante (90) des Quadrates abgeflacht ist und an den anderen Kanten Flansche (91, 92, 93, 94) vorgesehen sind.

17. Lautsprechergehäuse nach Anspruch 1, dadurch gekennzeichnet, daß das Verbindungsteil (98) einen Körper (99) mit im wesentlichen rechteckigen Querschnitt enthält, der mit einer Verblendung versehen ist und der nicht über die gesamten Stoßstellen der Lautsprecherwände (102, 103) reicht.

18. Lautsprechergehäuse nach Anspruch 1, dadurch gekennzeichnet, daß das Verbindungsteil (106) einen zylindrischen Körper (109) mit einer Bohrung (110) aufweist, der mit einem ersten Steg (111) versehen ist, darin das Innere des Lautsprechergehäuses führt und der mit einem zweiten Steg (116) versehen ist, der nach außen führt und eine Verblendung (117, 118) enthält.

19. Lautsprechergehäuse nach Anspruch 1, <u>dadurch gekenn-</u>
<u>zeichnet</u>, daß das Verbindungsteil (119) eine Verblendung (124) aufweist, die über einen Steg (123) mit
einem quasi-quadratischen Körper (120) verbunden ist,
der in Ausspannungen der Wände (125, 126) eingreift.

1/3

FIG.1

FIG.2

FIG.3

FIG.4

FIG.5

FIG.7

FIG.6

FIG. 8

FIG. 10

FIG. 9

FIG. 11

FIG. 12

3/3

FIG. 13

FIG. 14

FIG. 15

FIG. 16

0021455

Europäisches Patentamt

**EUROPÄISCHER RECHERCHENBERICHT**

Nummer der Anmeldung
EP 80 20 0155

| | **EINSCHLÄGIGE DOKUMENTE** | | | KLASSIFIKATION DER ANMELDUNG (Int Cl ³) |
|---|---|---|---|---|
| Kategorie | Kennzeichnung des Dokuments mit Angabe, soweit erforderlich, der maßgeblichen Teile | | betrifft Anspruch | |
| | DE - A - 2 123 037 (STANDARD ELEKTRIK LORENZ AG)<br><br>* Seite 3, Zeile 5 bis Seite 4, Zeile 4; Figuren * | | 1-4,8 | H 04 R 1/02<br>F 16 B 12/04 |
| | -- | | | |
| | FR - A - 2 312 909 (J. SETTON)<br><br>* Seite 3, Zeile 27 bis Seite 4, Zeile 35; Figuren * | | 1,3,4 | |
| | -- | | | |
| | GB - A - 1 451 115 (STANDARD TELEPHONES AND CABLES)<br><br>* Seite 1, Zeilen 8-11; Seite 1, Zeilen 33-60; Seite 1, Zeile 76 bis Seite 2, Zeile 47; Figuren 1-3 * | | 1,5,7, 15 | RECHERCHIERTE SACHGEBIETE (Int Cl ³)<br><br>H 04 R 1/02<br>F 16 B 12/04<br>12/46<br>H 05 K 5/04<br>7/18<br>H 04 B 1/08 |
| | -- | | | |
| | FR - A - 1 245 776 (H.G. KEWLEY)<br><br>* Seite 3, rechte Spalte, letzte Zeile bis Seite 4, linke Spalte, Zeile 11; Figur 12 * | | 8,9, 12,15 | |
| | -- | | | |
| | US - A - 3 989 397 (R.M. BAKER)<br><br>* Spalte 2, Zeile 63 bis Spalte 5, Zeile 14; Figuren 2-6 * | | 5,6, 10,15, 16 | KATEGORIE DER GENANNTEN DOKUMENTE<br><br>X: von besonderer Bedeutung<br>A: technologischer Hintergrund<br>O: nichtschriftliche Offenbarung<br>P. Zwischenliteratur |
| | FR - A - 2 371 856 (TEKTRONIX INC)<br><br>* Seite 3, Zeile 9 bis Seite 4, Zeile 24; Figuren 3,4 * | | 5,7 | T. der Erfindung zugrunde liegende Theorien oder Grundsatze<br>E kollidierende Anmeldung<br>D in der Anmeldung angefuhrtes Dokument<br>L. aus andern Grunden angefuhrtes Dokument |
| | -- | | | |
| | ./. | | | &: Mitglied der gleichen Patent-familie. übereinstimmendes Dokument |

Der vorliegende Recherchenbericht wurde für alle Patentansprüche erstellt.

| Recherchenort Den Haag | Abschlußdatum der Recherche 16-07-1980 | Prüfer MINNOYE |
|---|---|---|

EPA form 1503.1 06.78

**Europäisches Patentamt**

**EUROPÄISCHER RECHERCHENBERICHT**

| | EINSCHLÄGIGE DOKUMENTE | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| A | GB - A - 817 379 (E.K. COLE LTD.) <br> * Seite 1, Zeilen 55-82; Figuren * <br><br> -- | 1,10, 14,15 | |
| A | US - A - 2 135 000 (R.H. CROUCH) <br> * Seite 1, linke Spalte, Zeile 28 bis rechte Spalte, Zeile 21; Figuren * <br><br> ---- | 12-16 | |
| | | | RECHERCHIERTE SACHGEBIETE (Int. Cl. ³) |

EPA Form 1503.2   06.78